# EUROPEAN PATENT APPLICATION

(11) **EP 4 645 469 A1**
(43) Date of publication of application: **05.11.2025**
(21) Application number: 23911551.2
(22) Date of filing: 04.12.2023
(51) Int. Cl.: H01M 4/525, C01G 53/00, H01M 4/36

(54) **COATED POSITIVE ELECTRODE ACTIVE MATERIAL, POSITIVE ELECTRODE, AND SECONDARY BATTERY**

(30) Priority: 26.12.2022 JP 2022208846
(71) Applicant: Panasonic Intellectual Property Management Co., Ltd., Kadoma-shi, Osaka 571-0057 (JP)
(72) Inventor: ASANO, Kazuko, Kadoma-shi, Osaka 571-0057 (JP); OKI, Yukihiro, Kadoma-shi, Osaka 571-0057 (JP)
(74) Representative: Novagraaf International SA
(86) International application number: PCT/JP2023/043249
(87) International publication number: WO 2024/142770

(57) **Abstract**

A coated positive electrode active material 10 according to the present disclosure includes: a positive electrode active material; an oxide-containing layer 12 coating at least a portion of a surface of a particle 11 of the positive electrode active material; and a phosphorus-containing layer 13 coating at least a portion of a surface of the oxide-containing layer 12, wherein the oxide-containing layer 12 includes an oxide and is in contact with the surface of the particle 11, the phosphorus-containing layer 13 includes a phosphate compound, and a mass ratio of P contained in the phosphorus-containing layer 13 to the positive electrode active material is 0.1% or more.

## Description

### TECHNICAL FIELD

The present disclosure relates to a coated positive electrode active material, a positive electrode, and a secondary battery.

### BACKGROUND ART

Conventional secondary batteries are known to undergo side reactions such as reduction and elution of transition metals contained in active materials as well as decomposition reactions of electrolyte solutions caused thereby. Such side reactions accelerate degradation of secondary batteries.

Non Patent Literature 1 describes the addition of tris(trimethylsilyl) phosphate to an electrolyte solution to improve the cycle characteristics of a lithium-rich positive electrode material Li[Li_{0.2}Ni_{0.13}Mn_{0.54}Co_{0.13}]O₂. Patent Literature 1 discloses a positive electrode including a positive electrode active material that includes: a composite oxide particle; a coating layer provided in at least a portion of the composite oxide particle and consisting of an oxide containing lithium (Li) and a coating element of at least one of nickel (Ni) and manganese (Mn); and a surface layer provided in at least a portion of the coating layer and containing phosphorus (P). Patent Literature 2 discloses a positive electrode active material for a nonaqueous electrolyte secondary battery, wherein an oxide containing Al and/or a hydroxide containing Al having a protruding shape is uniformly distributed and adhered to the surface of a positive electrode active material particle.

### CITATION LIST

### Non Patent Literature

Non Patent Literature 1: J. Zhang et al. "Artificial Interface Deriving from Sacrificial Tris(trimethylsilyl)phosphate Additive for Lithium Rich Cathode Materials" Electrochimica Acta 117 (2014) 99-104.

### Patent Literature

Patent Literature 1: JP 2008-016235 A
Patent Literature 2: JP 2009-245917 A

### SUMMARY OF INVENTION

### Technical Problem

The present disclosure provides a coated positive electrode active material in which metal elution is suppressed.

### Solution to Problem

The coated positive electrode active material of the present disclosure includes:
a positive electrode active material;
an oxide-containing layer coating at least a portion of a surface of a particle of the positive electrode active material; and
a phosphorus-containing layer coating at least a portion of a surface of the oxide-containing layer, wherein
the oxide-containing layer includes an oxide and is in contact with the surface of the particle,
the phosphorus-containing layer includes a phosphate compound, and
a mass ratio of P contained in the phosphorus-containing layer to the positive electrode active material is 0.1% or more.

### Advantageous Effects of Invention

The present disclosure provides a coated positive electrode active material in which metal elution is suppressed.

### BRIEF DESCRIPTION OF DRAWINGS

FIG. 1 is a cross-sectional view schematically showing the configuration of a coated positive electrode active material 10 according to Embodiment 1.
FIG. 2A is a process diagram showing a positive electrode manufacturing method.
FIG. 2B is a process diagram showing another positive electrode manufacturing method.
FIG. 3 is a cross-sectional view schematically showing the configuration of a positive electrode 16 according to Embodiment 3.
FIG. 4 is a longitudinal sectional view schematically showing a secondary battery 100 according to Embodiment 4.

### DESCRIPTION OF EMBODIMENTS

Embodiments of the present disclosure are described in detail below with reference to the drawings. The present disclosure is not limited to the following embodiments.

### (Embodiment 1)

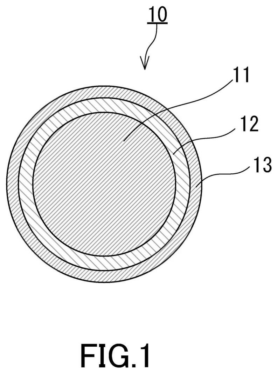

FIG. 1 is a cross-sectional view schematically showing the configuration of a coated positive electrode active material 10 according to Embodiment 1. The coated positive electrode active material 10 includes a positive electrode active material, an oxide-containing layer 12 coating at least a portion of the surface of a particle 11 of the positive electrode active material, and a phosphorus-containing layer 13 coating at least a portion of the surface of the oxide-containing layer 12. The oxide-containing layer 12 includes an oxide and is in contact with the surface of the particle 11. The phosphorus-containing layer 13 includes a phosphate compound. The mass ratio of P (phosphorus) contained in the phosphorus-containing layer 13 to the positive electrode active material is 0.1% or more.

The mass ratio of P can be determined, for example, by inductively coupled plasma atomic emission spectrometry (ICP-AES) using the analyzer iCAP7400 Duo (Thermo Fisher Scientific K.K.).

The ratio of the mass of P at the interface between the surface of the particle 11 of the positive electrode active material and the oxide-containing layer 12 to the mass of P on the surface of the particle of the coated positive electrode active material 10 may be 3% or less. The ratio of the mass of the phosphate compound at the interface between the surface of the particle 11 of the positive electrode active material and the oxide-containing layer 12 to the mass of the phosphate compound on the surface of the particle of the coated positive electrode active material 10 may be 3% or less. The phosphate compound may not be present at the interface between the surface of the particle 11 of the positive electrode active material and the oxide-containing layer 12.

In a battery, contact between the positive electrode active material and the electrolyte causes side reactions such as metal elution from the positive electrode active material and gas generation due to decomposition reaction of the electrolyte, resulting in degradation of the battery. On the other hand, when a coating of a phosphate compound such as tris(trimethylsilyl) phosphate (TMSP) is formed on the surface of the positive electrode active material to hinder contact between the positive electrode active material and the electrolyte, contact between the positive electrode active material and TMSP, which is an acidic substance, degrades the surface of the positive electrode active material, resulting in a reduction of the battery capacity. In the coated positive electrode active material 10 of the present disclosure, the oxide-containing layer 12 coats the surface of the particle 11 of the positive electrode active material in contact with the surface, and the phosphorus-containing layer 13 coats the oxide-containing layer 12. According to this configuration, contact between the phosphate compound and the positive electrode active material is hindered, suppressing deterioration of the positive electrode active material, and in this state, metal elution can be suppressed.

In the case of the addition of, for example, TMSP to the electrolyte solution as disclosed in Non Patent Literature 1, a sufficient amount of TMSP cannot be used to enhance the characteristics due to the limit of the content of TMSP soluble in the electrolyte solution. The addition of TMSP to the electrolyte solution can form a TMSP self-coating on the positive electrode. However, the mass ratio of P contained in the coating to the total mass of the positive electrode active material is approximately 0.0051 mass%. In the coated positive electrode active material of the present disclosure, the mass ratio of P contained in the phosphorus-containing layer 13 to the positive electrode active material is 0.1% or more. According to this configuration, it is possible to sufficiently hinder contact between the positive electrode active material and the electrolyte solution, suppressing metal elution from the positive electrode active material.

The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, in the case where a lithium-containing transition metal oxide or a lithium-containing transition metal phosphate is used as the positive electrode active material, the cost for manufacturing a battery can be reduced and the average discharge voltage can be enhanced. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode active material may include a lithium nickel oxide having a layered rock salt-type crystal structure. The proportion of Ni among metal elements excluding Li that are contained in the lithium nickel oxide may be 50 atom% or more. The lithium nickel oxide may include other transition metals. Lithium nickel oxides are useful for achieving a high operating voltage. According to the configuration of the coated positive electrode active material according to Embodiment 1, elution of metal ions from the positive electrode active material can be suppressed. Since nickel is susceptible to elution from the positive electrode active material, the technique of the present disclosure is particularly expected to be effective in suppressing such elution.

The lithium nickel oxide may be represented by the following composition formula (I). An element M1 is at least one selected from the group consisting of V, Co, and Mn. An element M2 is at least one selected from the group consisting of Mg, Al, Ca, Ti, Cu, Zn, and Nb. The composition formula (I) satisfies 0.9 ≤ α ≤ 1.10, -0.05 ≤ β ≤ 0.05, 0.5 ≤ x1 < 1, 0 ≤ x2 ≤ 0.5, and 0 < 1-x1-x2 ≤ 0.5.

Li_{α}Niₓ₁M1ₓ₂M2₍₁₋ₓ₁₋ₓ₂₎O_{2+β} (I)

The oxide-containing layer 12 is a layer containing an oxide, and coats at least a portion of the surface of the particle 11 of the positive electrode active material and is in contact with the surface of the particle 11 of the positive electrode active material. The oxide-containing layer 12 is formed by the oxide being present in contact with at least a portion of the surface of the particle 11 of the positive electrode active material.

The oxide-containing layer 12 may consist substantially of the oxide. "The oxide-containing layer 12 consists substantially of the oxide" means that the mass percentage of the oxide in the oxide-containing layer 12 is 97 mass% or more. The mass percentage of the oxide in the oxide-containing layer 12 may be 98 mass% or more or 99 mass% or more. The oxide-containing layer 12 may consist of the oxide.

The thickness of the oxide-containing layer 12 may be 1 nm or more and 2 µm or less, and is more preferably 3 nm or more and 10 nm or less.

The oxide may include an oxide containing at least one element selected from the group consisting of metal elements and metalloid elements.

The oxide may be a compound that readily bonds to a phosphate compound described below. The oxide may be a basic oxide or an amphoteric oxide; however, an oxide that is basic to positive electrode active materials and insoluble in electrolyte solutions is preferred. Although the mechanism has not yet been elucidated, it is presumed that such an oxide stably remains on the surface of the positive electrode even after a battery undergoes charge and discharge, and consequently the phosphate compound is also effectively retained on the surface of the positive electrode.

The oxide may include at least one selected from the group consisting of Si, Zr, Al, and Ti. The oxide may include at least one selected from the group consisting of Si, Zr, and Al.

The oxide may include at least one selected from the group consisting of SiO₂, ZrO₂, Al₂O₃, and TiO₂. The oxide may include at least one selected from the group consisting of SiO₂, ZrO₂, and Al₂O₃.

The oxide may include at least one selected from the group consisting of Si and Zr. The oxide may include at least one selected from the group consisting of SiO₂ and ZrO₂. SiO₂ and ZrO₂ are generally basic to positive electrode active materials and insoluble in electrolyte solutions.

The oxide-containing layer 12 may further include Li. The oxide may be a composite oxide of the above-described element and Li.

The phosphorus-containing layer 13 is a layer containing a phosphate compound and coats at least a portion of the surface of the oxide-containing layer 12. The phosphorus-containing layer 13 is formed by the phosphate compound being present on at least a portion of the surface of the oxide-containing layer 12, which coats at least a portion of the surface of the particle 11 of the positive electrode active material. The phosphorus-containing layer 13 may be in contact with the surface of the oxide-containing layer 12. The phosphorus-containing layer 13 may not be in contact with the surface of the particle 11 of the positive electrode active material.

The phosphorus-containing layer 13 may consist substantially of the phosphate compound. "The phosphorus-containing layer 13 consists substantially of the phosphate compound" means that the mass percentage of the phosphate compound in the phosphorus-containing layer 13 is 97 mass% or more. The mass percentage of the phosphate compound in the phosphorus-containing layer 13 may be 98 mass% or more or 99 mass% or more. The phosphorus-containing layer 13 may consist of the phosphate compound.

In the present specification, the term "phosphate compound" means an oxoacid of phosphorus. The phosphate compound is, for example, phosphoric acid, phosphonic acid, phosphinic acid, pyrophosphoric acid, a phosphate ester, a phosphonate ester, a phosphinate ester, a derivative thereof, or a condensate thereof. The phosphate compound may be an organic phosphorus compound. In the present specification, the term "organic phosphorus compound" means a compound containing carbon and phosphorus. The phosphate compound may be a compound including a carbon-phosphorus bond.

The thickness of the phosphorus-containing layer 13 may be 0.05 µm or more and 2 µm or less, and is more preferably 0.05 µm or more and 1 µm or less.

The phosphate compound may be bonded to the oxide in the oxide-containing layer 12.

The phosphate compound may include a P-O-P bond. The phosphate compound may be polyphosphoric acid, a polyphosphate ester, or a derivative thereof.

The phosphate compound may include a structure represented by chemical formula (1).

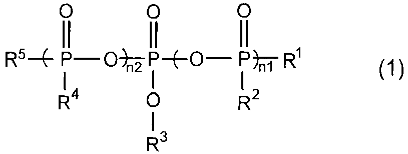

In the chemical formula (1), n1 and n2 are each independently an integer equal to or greater than 0; R¹, R², R⁴, and R⁵ each independently represent -OR or -(CH₂)ₘ₁X1; R³ and R each independently represent a direct bond to the oxide in the oxide-containing layer 12, a hydrogen atom, -(CH₂)ₘ₂X2, a trimethylsilyl group, or a triethylsilyl group; m1 is an integer from 0 to 15; m2 is a natural number from 1 to 3; X1 and X2 each independently represent a hydrogen atom, a hydroxy group, an amino group, a carboxy group, a cyano group, or a fluorine atom; when a plurality of R²s are present, the plurality of R²s are independent of each other; and when a plurality of R⁴s are present, the plurality of R⁴s are independent of each other.

Owing to the inclusion of this structure, the phosphate compound is relatively stable even in a high-voltage environment. Accordingly, even when the upper limit voltage of a secondary battery is high, for example, exceeding 4.3 V, it is possible to sufficiently suppress side reactions such as oxidative decomposition of the electrolyte and suppress metal elution from the positive electrode active material.

In the chemical formula (1), n1 and n2 each may be independently 1 or greater; at least one selected from the group consisting of n1 and n2 may be 1 or greater; n1 and n2 each may be independently 500 or smaller; X1 may be a hydrogen atom; and X2 may be a hydrogen atom.

In the chemical formula (1), m1 may be an integer from 0 to 11 or an integer from 0 to 6. When m1 is an integer from 0 to 6, side reactions can be further suppressed.

In the chemical formula (1), m2 may be 1 or 2.

The phosphate compound is, for example, a silyl phosphite, phosphonic acid, phosphoric acid, pyrophosphoric acid, or a condensate thereof. The phosphate compound may be a silyl phosphite, tris(trimethylsilyl) phosphate (TMSP), or a TMSP-derived compound, such as a condensate of TMSP. In the chemical formula (1), R¹, R², R⁴, and R⁵ each may independently represent -OR, and R³ and R each may independently represent a direct bond to the oxide in the oxide-containing layer 12, a hydrogen atom, or a trimethylsilyl group.

In the chemical formula (1), R³ may represent a direct bond to the oxide.

The direct bond to the oxide may be bonded to a metal element or metalloid element of the oxide.

The phosphorus-containing layer 13 may include one or two or more phosphate compounds.

The phosphorus-containing layer 13 coats at least a portion of the surface of the oxide-containing layer 12. According to this configuration, direct contact between the phosphate compound and the positive electrode active material is hindered. Therefore, in a state where deterioration of the positive electrode active material is suppressed, side reactions such as metal elution from a positive electrode can be suppressed.

The phosphorus-containing layer 13 may coat the entire surface of the oxide-containing layer 12.

The phosphorus-containing layer 13 may be in contact with the oxide-containing layer 12.

The phosphate compound may or may not form a chemical bond to the oxide in the oxide-containing layer 12. The phosphate compound may be physically attached to the oxide-containing layer 12.

In the coated positive electrode active material 10, the mass ratio of P to the positive electrode active material may be 3 mass% or less or 2 mass% or less. The mass ratio of P to the positive electrode active material may be 0.1 mass% or more and 2 mass% or less.

The coated positive electrode active material 10 is in the form of particles, for example. The shape of the particles of the coated positive electrode active material 10 is not particularly limited. The shape of the particles of the coated positive electrode active material 10 is an acicular, flaky, spherical, or ellipsoidal shape.

### (Method for Manufacturing Coated Positive Electrode Active Material)

The coated positive electrode active material 10 can be manufactured, for example, by the following method.

A powder of a positive electrode active material is prepared. The oxide-containing layer 12 is formed on the surface of the particle 11 of the positive electrode active material by coating the powder of the positive electrode active material with an oxide by atomic layer deposition (ALD). The oxide-containing layer 12 may be formed by low-temperature ALD. Low-temperature ALD refers to atomic layer deposition in which the deposition temperature is, for example, 200°C or less. The atomic layer deposition may be plasma ALD in which plasma is used to excite gas.

The means of forming the oxide-containing layer 12 is not limited to the above. The oxide-containing layer 12 may be formed by a mechanochemical method. The positive electrode active material and the oxide are mixed in an appropriate ratio to obtain a mixture, and the mixture is subjected to a milling process to impart mechanical energy to the mixture. A mixer such as a ball mill can be used for the milling process.

Next, a solution including a phosphate compound and a solvent is prepared.

As described above, the phosphate compound includes, for example, the structure represented by the chemical formula (1). The phosphate compound in the raw material stage refers to a compound in a state before condensation with other phosphate compounds and/or bonding to the oxide can occur, and thus can be distinguished from the phosphate compound contained in the phosphorus-containing layer 13. The phosphate compound in the raw material stage includes, for example, a structure represented by chemical formula (2).

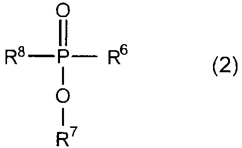

In the chemical formula (2), R⁷ represents a hydrogen atom, -(CH₂)ₖ₁Y1, a trimethylsilyl group, or a triethylsilyl group; R⁶ and R⁸ each independently represent -OR or -(CH₂)ₖ₂Y2; R represents a hydrogen atom, -(CH₂)ₖ₃Y3, a trimethylsilyl group, or a triethylsilyl group; k1 and k3 are each independently a natural number from 1 to 3; k2 is an integer from 0 to 15; and Y1, Y2, and Y3 each independently represent a hydrogen atom, a hydroxy group, an amino group, a carboxy group, a cyano group, or a fluorine atom.

The phosphate compound in the raw material stage may include at least one selected from the group consisting of a silyl phosphite and phosphoric acid. The silyl phosphite may be TMSP.

As the solvent, a cyclic carbonate, a chain carbonate, a cyclic carboxylate, or the like is used. Examples of cyclic carbonates include propylene carbonate (PC), ethylene carbonate (EC), and fluoroethylene carbonate (FEC). Examples of chain carbonates include diethyl carbonate (DEC), ethyl methyl carbonate (EMC), and dimethyl carbonate (DMC). Examples of cyclic carboxylates include γ-butyrolactone (GBL) and γ-valerolactone (GVL). One solvent may be used alone or a combination of two or more solvents may be used. From the viewpoint of the manufacturing process, a solvent having a high boiling point is preferred. The boiling point of the solvent is, for example, 200°C or more.

The concentration of the phosphate compound in the solution may be 0.1 mass% to 20 mass%.

Next, the prepared solution is brought into contact with the particle 11 of the positive electrode active material having the oxide-containing layer 12 formed on its surface. The bringing the solution into contact may be conducted by immersing the above particle in the solution or by applying the solution to the above particle by spraying or the like. For example, the solution may be brought into contact with the particle of the positive electrode active material by forming the positive electrode active material including the above particle into a layer and either applying the solution onto the layer or impregnating the layer with the solution. The contact time with the solution is, for example, 15 minutes or more and 120 minutes or less, and the temperature is, for example, 20°C or more and 60°C or less.

The particle of the positive electrode active material brought into contact with the solution is vacuum dried. The vacuum drying time may be, for example, 5 minutes or more and 48 hours or less. Thus, the coated positive electrode active material 10 according to Embodiment 1 is obtained. Vacuum drying means drying under a pressure lower than atmospheric pressure.

After the bringing the solution into contact and before the vacuum drying, the particle of the positive electrode active material may be washed. For example, a solvent is used to wash the particle of the positive electrode active material. The solvent used for the washing may be the solvent used in the above solution including a phosphate compound and a solvent, for example, DMC. According to the above, by-products such as decomposition products of the phosphate compound can be removed. Consequently, gas generation in the positive electrode due to reactions between the by-products and the electrolyte can be suppressed.

### (Embodiment 2)

A positive electrode manufacturing method according to Embodiment 2 satisfies at least one selected from the group consisting of the following (A) and (B):
(A) including:
   forming an oxide-containing layer on at least a portion of a surface of a particle of a positive electrode active material;
   forming a positive electrode active material layer including the particle, on which the oxide-containing layer is formed, on a positive electrode current collector;
   bringing a solution including a phosphate compound and a solvent into contact with the positive electrode active material layer; and
   after the bringing the solution into contact, drying the positive electrode active material layer; and
(B) including:
   forming an oxide-containing layer on at least a portion of a surface of a particle of a positive electrode active material;
   bringing a solution including a phosphate compound and a solvent into contact with the particle on which the oxide-containing layer is formed;
   after the bringing the solution into contact, vacuum drying the particle; and
   forming a positive electrode active material layer including the particle obtained after undergoing the drying on a positive electrode current collector.

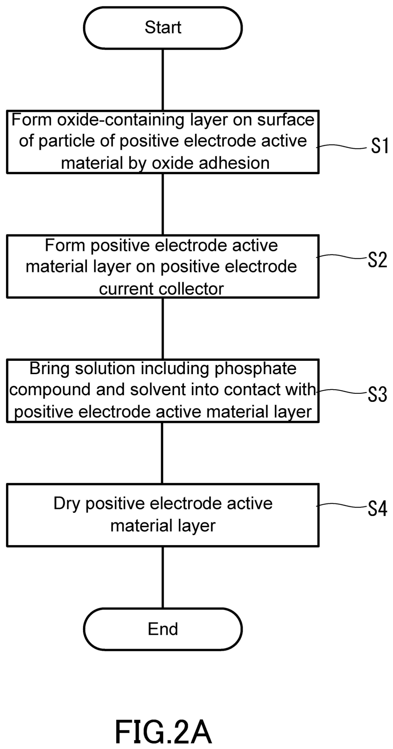

FIG. 2A is a process diagram showing a positive electrode manufacturing method.

In Step S1, an oxide-containing layer is formed on at least a portion of the surface of a particle of a positive electrode active material.

The oxide-containing layer is a layer containing an oxide. The oxide is, for example, the oxide described above in Embodiment 1.

In Step S1, the oxide-containing layer may be formed by atomic layer deposition (ALD) or a mechanochemical method. The oxide-containing layer may be formed by ALD.

In Step S2, a positive electrode active material layer including the particle, on which the oxide-containing layer is formed, is formed on a positive electrode current collector. In Step S2, the positive electrode active material layer is formed as follows, for example.

A positive electrode slurry including the positive electrode active material obtained in Step S1 is prepared. For example, the positive electrode active material, a binder, and a conductive additive are dispersed in a dispersion medium to prepare the positive electrode slurry.

The positive electrode slurry is applied to the positive electrode current collector to form the positive electrode active material layer. Specifically, a coating film is formed by applying the positive electrode slurry to the positive electrode current collector. The dispersion medium is removed from the coating film, and the positive electrode active material layer is thus obtained. An example of a method for removing the dispersion medium is heating the coating film. The dispersion medium is, for example, N-methyl-2-pyrrolidone (NMP). Thus, the positive electrode active material layer is formed on the positive electrode current collector.

In Step S3, a solution including a phosphate compound and a solvent is brought into contact with the positive electrode active material layer. In Step S3, the bringing the solution into contact with the positive electrode active material layer may be conducted by impregnating the positive electrode active material layer formed on the positive electrode current collector with the solution, or by applying the solution onto the positive electrode active material layer. The contact time is, for example, 15 minutes or more and 120 minutes or less.

The solution including a phosphate compound and a solvent is, for example, the solution described in Embodiment 1. That is, the phosphate compound may include the structure represented by the above chemical formula (2). The phosphate compound may include TMSP. The solvent may be the solvent described above in Embodiment 1.

In Step S4, the positive electrode active material layer is dried. The drying time in Step S4 may be, for example, 5 minutes or more and 48 hours or less.

After Step S3 and before Step S4, the positive electrode active material layer may be washed. For example, a solvent is used to wash the positive electrode active material layer. The solvent used for the washing may be the solvent used in the solution including a phosphate compound and a solvent, for example, DMC. According to the above, by-products such as decomposition products of the phosphate compound can be removed. Consequently, gas generation in the positive electrode due to reactions between the by-products and the electrolyte can be suppressed.

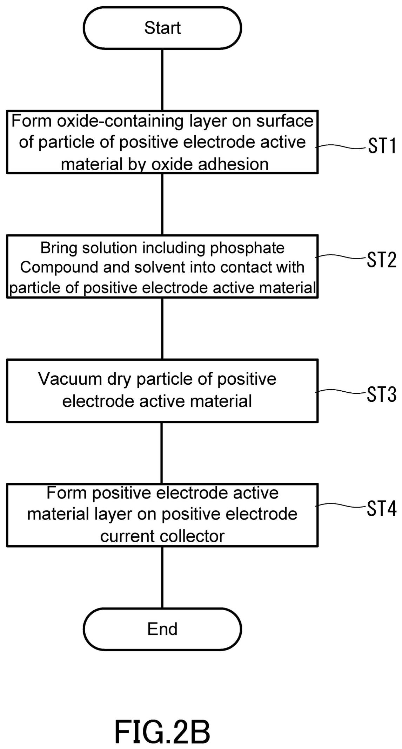

FIG. 2B is a process diagram showing another positive electrode manufacturing method.

In Step ST1, an oxide-containing layer is formed on at least a portion of the surface of a particle of a positive electrode active material in the same manner as in Step S1.

In Step ST2, a solution including a phosphate compound and a solvent is brought into contact with the particle of the positive electrode active material obtained in Step ST1. The bringing the solution into contact with the particle of the positive electrode active material may be conducted by immersing the particle of the positive electrode active material in the solution, or by applying the solution to the particle of the positive electrode active material by spraying or the like.

In Step ST3, the particle of the positive electrode active material obtained in Step ST2 is vacuum dried. Vacuum drying means drying under a pressure lower than atmospheric pressure. The vacuum drying time in Step ST3 may be, for example, 5 minutes or more and 48 hours or less.

In Step ST4, a positive electrode active material layer is formed on a positive electrode current collector. In Step ST4, the positive electrode active material layer is formed on the positive electrode current collector using the particle of the positive electrode active material obtained in Step ST3, in the same manner as in Step S2.

After Step ST2 and before Step ST3, the particle of the positive electrode active material may be washed.

The positive electrode manufacturing method of the present disclosure may satisfy the (A).

The positive electrode manufacturing method of the present disclosure may satisfy both the (A) and the (B). The positive electrode manufacturing method of the present disclosure may include: forming an oxide-containing layer on at least a portion of a surface of a particle of a positive electrode active material; bringing a solution including a phosphate compound and a solvent into contact with the particle on which the oxide-containing layer is formed; after the bringing the solution into contact, vacuum drying the particle; forming a positive electrode active material layer including the particle obtained after undergoing the drying on a positive electrode current collector; further bringing a solution including a phosphate compound and a solvent into contact with the positive electrode active material layer; and after the further bringing the solution into contact, vacuum drying the positive electrode active material layer. That is, in the positive electrode manufacturing method of the present disclosure, Steps S3 and S4 may be conducted after Steps ST1 to ST4.

### (Embodiment 3)

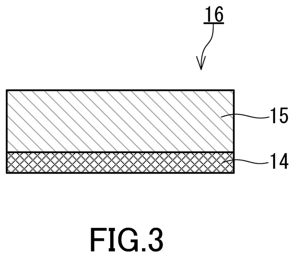

FIG. 3 is a cross-sectional view schematically showing the configuration of a positive electrode 16 according to Embodiment 3. The positive electrode 16 includes a positive electrode current collector 14 and a positive electrode active material layer 15 supported on the positive electrode current collector 14. The positive electrode active material layer 15 includes the coated positive electrode active material according to Embodiment 1.

The positive electrode active material layer 15 may include only the coated positive electrode active material according to Embodiment 1 as the positive electrode active material, or may include a positive electrode active material different from the coated positive electrode active material according to Embodiment 1. The positive electrode active material layer 15 may include the coated positive electrode active material on its surface.

The positive electrode active material layer 15 may further include other materials such as a binder, an ion conductor, and a conductive additive.

The positive electrode current collector 14 can be, for example, a metal foil. Examples of a metal constituting the positive electrode current collector 14 include aluminum, titanium, an alloy containing any of these metal elements, and stainless steel.

The positive electrode 16 is manufactured, for example, by the manufacturing method according to Embodiment 2.

### (Embodiment 4)

A secondary battery according to Embodiment 4 includes the positive electrode according to Embodiment 3, a negative electrode, and an electrolyte. By using the positive electrode according to Embodiment 3, characteristics of the secondary battery, such as charge and discharge efficiency, can be improved.

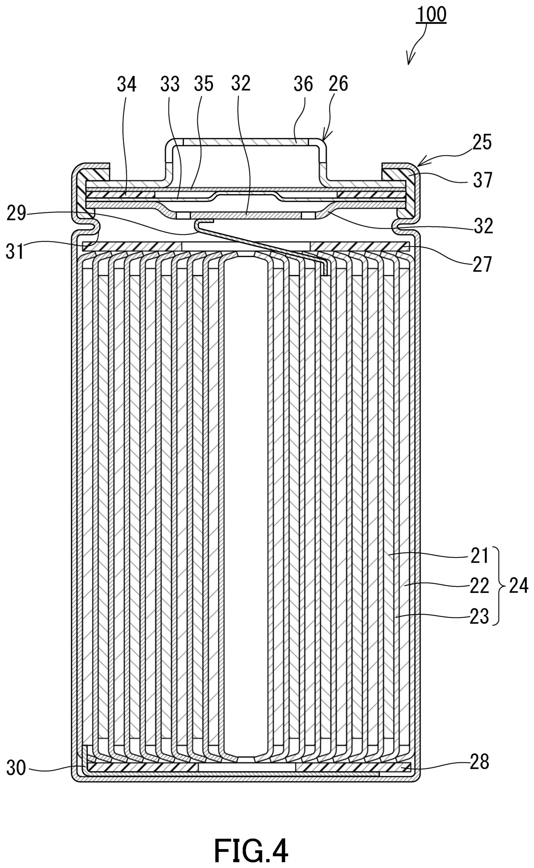

FIG. 4 is a longitudinal sectional view schematically showing a secondary battery 100 according to Embodiment 4. The secondary battery 100 is a cylindrical battery that includes a cylindrical battery case, a wound-type electrode group 24, and an electrolyte solution that is not illustrated. The electrode group 24 is housed in the battery case and is in contact with the electrolyte solution.

The battery case is composed of a case body 25 that is a bottomed cylindrical metal-made container and a sealing body 26 that seals the opening of the case body 25. A gasket 37 is disposed between the case body 25 and the sealing body 26. The gasket 37 ensures hermetic sealing of the battery case. Within the case body 25, insulating plates 27 and 28 are disposed at the respective ends of the electrode group 24 in the direction of the winding axis of the electrode group 24.

The case body 25 has, for example, a stepped portion 31. The stepped portion 31 can be formed by pressing a portion of the side wall of the case body 25 from the outside. The stepped portion 31 may be formed in an annular shape on the side wall of the case body 25 along the circumferential direction of a virtual circle defined by the case body 25. In this case, the sealing body 26 is supported, for example, by the surface of the stepped portion 31 facing the opening.

The sealing body 26 includes a filter 32, a lower valve body 33, an insulating member 34, an upper valve body 35, and a cap 36. In the sealing body 26, these components are stacked in the above order. The sealing body 26 is attached to the opening of the case body 25 so that the cap 36 is located outside the case body 25 and the filter 32 is located inside the case body 25.

The above components of the sealing body 26 are each, for example, disk-shaped or ring-shaped. The above components are electrically connected to each other, except for the insulating member 34.

The electrode group 24 includes a positive electrode 21, a negative electrode 22, and a separator 23. The positive electrode 21, the negative electrode 22, and the separator 23 are all strip-shaped. The width directions of the strip-shaped positive electrode 21 and negative electrode 22 are parallel to the winding axis of the electrode group 24, for example. The separator 23 is disposed between the positive electrode 21 and the negative electrode 22. The positive electrode 21 and the negative electrode 22 are spirally wound with the separator 23 interposed between these electrodes.

When a cross-section of the secondary battery 100 in a direction orthogonal to the winding axis of the electrode group 24 is observed, the positive electrode 21 and the negative electrode 22 are alternately stacked in the radial direction of a virtual circle defined by the case body 25, with the separator 23 interposed between these electrodes.

The positive electrode 21 is electrically connected, via a positive electrode lead 29, to the cap 36 that also serves as the positive electrode terminal. One end of the positive electrode lead 29 is, for example, connected to the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is, for example, welded to the surface of the filter 32 facing the electrode group 24.

The negative electrode 22 is electrically connected, via a negative electrode lead 30, to the case body 25 that also serves as the negative electrode terminal. One end of the negative electrode lead 30 is, for example, connected to an end of the negative electrode 22 in the longitudinal direction of the negative electrode 22. The other end of the negative electrode lead 30 is, for example, welded to the inner bottom surface of the case body 25.

The constituent elements of the secondary battery 100 are described in detail below.

The positive electrode 21 is the positive electrode according to Embodiment 3.

The negative electrode 22 includes a material having properties of occluding and releasing metal ions (e.g., lithium ions). The negative electrode 22 includes, for example, a negative electrode active material. The negative electrode may include a negative electrode current collector and a negative electrode active material layer supported on the surface of the negative electrode current collector.

The negative electrode current collector is, for example, a foil made of a metal material such as stainless steel, nickel, a nickel alloy, copper, or a copper alloy.

The negative electrode active material layer includes a negative electrode active material. The negative electrode active material can be a material capable of occluding and releasing lithium ions. Examples of the negative electrode active material include lithium titanate, graphite, silicon, a silicon compound, and a NiBi alloy.

The negative electrode active material layer may include other materials such as a conductive additive, an ion conductor, and a binder.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the lithium salt concentration within the above range, an electrolyte solution with excellent ion conductivity and moderate viscosity can be obtained. However, the lithium salt concentration is not limited to the above.

The nonaqueous solvent can be a cyclic carbonate, a chain carbonate, a cyclic ether, a chain ether, a nitrile, an amide, or the like. One selected from these solvents may be used, or two or more thereof may be used in combination.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more thereof may be used in combination.

The electrolyte solution may further include a phosphate compound, for example, TMSP. The electrolyte solution may be free of phosphorus.

It is usually preferable that a separator be interposed between the positive electrode and the negative electrode. The separator 23 has high ion permeability and moderate mechanical strength and insulation properties. The separator 23 can be a microporous film, a woven fabric, a nonwoven fabric, or the like. The material of the separator 23 can be, for example, a polymer. The polymer may be, for example, polyolefin, such as polypropylene or polyethylene.

In the secondary battery of the present disclosure, a polymer provided as the separator may be impregnated with the electrolyte solution, for example. That is, the secondary battery of the present disclosure may have a structure in which an electrolyte solution and a polymer are used in combination.

The secondary battery of the present disclosure may further include a solid electrolyte as an electrolyte. That is, the secondary battery of the present disclosure may have a hybrid structure in which an electrolyte solution and a solid electrolyte are used in combination. Examples of the solid electrolyte material include a halide solid electrolyte, a sulfide solid electrolyte, an oxide solid electrolyte, and an organic polymer solid electrolyte. In the present disclosure, the term "halide solid electrolyte" means a solid electrolyte that contains a halogen element as the main component of the anions. The term "sulfide solid electrolyte" means a solid electrolyte that contains sulfur as the main component of the anions. The term "oxide solid electrolyte" means a solid electrolyte that contains oxygen as the main component of the anions. The term "main component of the anions" means the anion having the largest amount of substance among all the anions constituting the solid electrolyte. The coating material in the secondary battery of the present disclosure can include a halide solid electrolyte.

In the present disclosure, as an example of the structure of a secondary battery according to Embodiment 3, the configuration example shown in FIG. 4 is described. In this example, the secondary battery includes a stacked-type electrode group in which a positive electrode and a negative electrode are stacked with a separator interposed therebetween, and an electrolyte solution, both of which are housed in an exterior body. However, the secondary battery according to the present disclosure is not limited to this configuration example. The secondary battery according to the present disclosure may have a shape of, for example, a cylindrical type, a prismatic type, a coin type, a button type, or a laminate type. Furthermore, as the electrode group in the secondary battery according to the present disclosure, the stacked-type electrode group may be replaced with any other type of electrode group such as an electrode group in which a positive electrode and a negative electrode are wound with a separator interposed therebetween.

The coated positive electrode active material and the positive electrode of the present disclosure are not limited in application to the secondary battery 100. In addition to lithium secondary batteries, the coated positive electrode active material and the positive electrode of the present disclosure can be applied to various secondary batteries, such as sodium secondary batteries and magnesium secondary batteries.

### (Other Embodiments)

### (Supplementary Note)

The above description of the embodiments discloses the following techniques.

### (Technique 1)

A coated positive electrode active material including:
a positive electrode active material;
an oxide-containing layer coating at least a portion of a surface of a particle of the positive electrode active material; and
a phosphorus-containing layer coating at least a portion of a surface of the oxide-containing layer, wherein
the oxide-containing layer includes an oxide and is in contact with the surface of the particle,
the phosphorus-containing layer includes a phosphate compound, and
a mass ratio of P contained in the phosphorus-containing layer to the positive electrode active material is 0.1% or more.

According to this configuration, metal elution from the positive electrode can be suppressed.

### (Technique 2)

The coated positive electrode active material according to Technique 1, wherein the oxide-containing layer consists substantially of the oxide. According to this configuration, in a state where deterioration of the positive electrode active material is suppressed, metal elution from the positive electrode can be suppressed.

### (Technique 3)

The coated positive electrode active material according to Technique 1 or 2, wherein the oxide includes at least one selected from the group consisting of Si, Zr, Al, and Ti. According to this configuration, metal elution from the positive electrode can be suppressed.

### (Technique 4)

The coated positive electrode active material according to any one of Techniques 1 to 3, wherein the oxide includes at least one selected from the group consisting of Si and Zr. According to this configuration, metal elution from the positive electrode can be further suppressed.

### (Technique 5)

The coated positive electrode active material according to any one of Techniques 1 to 4, wherein the oxide includes at least one selected from the group consisting of SiO₂ and ZrO₂. According to this configuration, metal elution from the positive electrode can be further suppressed.

### (Technique 6)

The coated positive electrode active material according to any one of Techniques 1 to 5, wherein the phosphate compound is bonded to the oxide. According to this configuration, metal elution from the positive electrode can be suppressed.

### (Technique 7)

The coated positive electrode active material according to any one of Techniques 1 to 6, wherein the phosphate compound includes a P-O-P bond. According to this configuration, metal elution from the positive electrode can be suppressed.

### (Technique 8)

The coated positive electrode active material according to any one of Techniques 1 to 7, wherein the phosphate compound includes a structure represented by chemical formula (1): 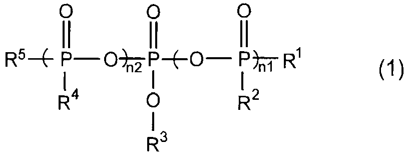
where n1 and n2 are each independently an integer equal to or greater than 0,
R¹, R², R⁴, and R⁵ each independently represent -OR or -(CH₂)ₘ₁X1,
R³ and R each independently represent a direct bond to the oxide, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

Owing to the inclusion of this structure, the phosphate compound is relatively stable even in a high-voltage environment. Accordingly, even when the upper limit voltage of the battery is high, it is possible to sufficiently suppress side reactions such as oxidative decomposition of the electrolyte and suppress metal elution from the positive electrode active material. Furthermore, the effect of suppressing side reactions can be sustained for a longer period.

### (Technique 9)

The coated positive electrode active material according to Technique 8, wherein in the chemical formula (1), R¹, R², R⁴, and R⁵ each independently represent -OR, and R³ and R each independently represent a direct bond to the oxide, a hydrogen atom, or a trimethylsilyl group. According to this configuration, metal elution from the positive electrode active material can be further suppressed.

### (Technique 10)

The coated positive electrode active material according to Technique 8 or 9, wherein in the chemical formula (1), R³ represents a direct bond to the oxide. According to this configuration, metal elution from the positive electrode active material can be further suppressed.

### (Technique 11)

The coated positive electrode active material according to any one of Techniques 1 to 10, wherein the positive electrode active material includes a lithium nickel oxide, and a proportion of Ni among metal elements excluding Li that are contained in the lithium nickel oxide is 50 atom% or more. According to this configuration, a high operating voltage of the battery can be achieved.

### (Technique 12)

A positive electrode including:
a positive electrode current collector; and
a positive electrode active material layer supported on the positive electrode current collector, wherein
the positive electrode active material layer includes the coated positive electrode active material according to any one of Techniques 1 to 11.

According to this configuration, side reactions in the positive electrode can be suppressed. Accordingly, characteristics of the battery can be improved.

### (Technique 13)

A secondary battery including:
the positive electrode according to Technique 12;
a negative electrode; and
an electrolyte.

According to this configuration, characteristics of the secondary battery can be improved.

### (Technique 14)

A method for manufacturing a positive electrode including a positive electrode current collector and a positive electrode active material layer supported on the positive electrode current collector, the method satisfying at least one selected from the group consisting of the following (A) and (B):
(A) including:
   forming an oxide-containing layer on at least a portion of a surface of a particle of a positive electrode active material;
   forming the positive electrode active material layer including the particle on the positive electrode current collector;
   bringing a solution including a phosphate compound and a solvent into contact with the positive electrode active material layer; and
   after the bringing the solution into contact, drying the positive electrode active material layer; and
(B) including:
   forming an oxide-containing layer on at least a portion of a surface of a particle of a positive electrode active material;
   bringing a solution including a phosphate compound and a solvent into contact with the particle on which the oxide-containing layer is formed;
   after the bringing the solution into contact, vacuum drying the particle; and
   forming the positive electrode active material layer including the particle after undergoing the drying on the positive electrode current collector.

According to this configuration of Technique 14, the positive electrode of the present disclosure can be efficiently manufactured.

### (Technique 15)

The method according to Technique 14, wherein when satisfying the (A), the method further includes, after the bringing the solution into contact and before the drying, washing the positive electrode active material layer, and when satisfying the (B), the method further includes, after the bringing the solution into contact and before the drying, washing the particle. According to this configuration, it is possible to manufacture a positive electrode in which side reactions such as oxidative decomposition of the electrolyte can be further suppressed.

### (Technique 16)

The method according to Technique 14 or 15, wherein the oxide-containing layer is formed by atomic layer deposition or a mechanochemical method. According to this configuration, the positive electrode of the present disclosure can be efficiently manufactured.

### (Technique 17)

The method according to any one of Techniques 14 to 16, wherein the phosphate compound includes a structure represented by chemical formula (2): 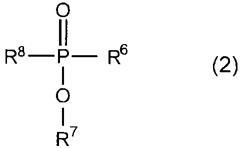
where R⁷ represents a hydrogen atom, -(CH₂)k₁Y1, a trimethylsilyl group, or a triethylsilyl group,
R⁶ and R⁸ each independently represent -OR or -(CH₂)ₖ₂Y2,
R represents a hydrogen atom, -(CH₂)ₖ₃Y3, a trimethylsilyl group, or a triethylsilyl group,
k1 and k3 are each independently a natural number from 1 to 3,
k2 is an integer from 0 to 15, and
Y1, Y2, and Y3 each independently represent a hydrogen atom, a hydroxy group, an amino group, a carboxy group, a cyano group, or a fluorine atom.

Owing to the phosphate compound having this structure, it is possible to efficiently manufacture a positive electrode in which even when the upper limit voltage is high, side reactions such as oxidative decomposition of the electrolyte can be sufficiently suppressed and metal elution from the positive electrode active material can be suppressed.

### (Technique 18)

The method according to according to any one of Techniques 14 to 17, wherein the phosphate compound includes tris(trimethylsilyl) phosphate. According to this configuration, it is possible to further efficiently manufacture a positive electrode in which metal elution from the positive electrode active material can be suppressed.

### Examples

The present disclosure is described in more detail below with reference to examples. The following examples are merely illustrative of one embodiment and are not intended to limit the present disclosure.

### (Example 1)

A positive electrode active material having a composition of LiNi_{0.8}Mn_{0.2}O₂ was subjected to low-temperature ALD at 200°C or less to form a coating of SiO₂ on the surface of the positive electrode active material. The thickness of the coating measured by spectroscopic ellipsometry was 9.8 nm.

A positive electrode slurry was prepared by stirring the oxide-coated positive electrode active material, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, an electrode plate was obtained in which the positive electrode active material layer was supported on a positive electrode current collector.

Tris(trimethylsilyl) phosphate (TMSP) was added to dimethyl carbonate (DMC) to obtain a TMSP solution. The concentration of TMSP in the TMSP solution was adjusted to 2 mass%.

The electrode plate was immersed in 1 mL of the TMSP solution. After being left stand at room temperature for 5 minutes, the electrode plate was taken out and washed with DMC. The washed electrode plate was vacuum dried for 30 minutes. Thus, a phosphorus-containing layer was formed. The amount of phosphorus (P) contained in the phosphorus-containing layer was measured by inductively coupled plasma (ICP) atomic emission spectrometry. The result indicated that the mass ratio of P to the used positive electrode active material was 0.18 mass%. In determining this ratio, the mass of the positive electrode active material can be based on the input amount.

Thus, the positive electrode of Example 1 was obtained. The positive electrode thus obtained includes, at least in the vicinity of its surface, a coated positive electrode active material that includes: an oxide-containing layer coating the surface of the particle of the positive electrode active material; and a phosphorus-containing layer coating at least a portion of the surface of the oxide-containing layer. In the coated positive electrode active material, the mass ratio of P to the positive electrode active material is presumed to be greater than 0.18 mass%, which was the value determined in the above measurement.

The positive electrode of Example 1, a Li metal foil serving as the counter electrode, a separator, and an electrolyte solution were used to fabricate the evaluation cell of Example 1. As the separator, a PP/PE/PP three-layer separator was used. The concentration of LiPF₆ in the electrolyte solution was 13 mol/L. The solvent for the electrolyte solution contained ethylene carbonate (EC) and DMC in a volume ratio of EC:DMC = 25:75.

### (Example 2)

In the formation of the oxide-containing layer by low-temperature ALD, a coating of Al₂O₃ was formed. The thickness of the coating measured by spectroscopic ellipsometry was 11.8 nm. A positive electrode of Example 2 was fabricated in the same manner as in Example 1 except for the above. The positive electrode of Example 2 was used to fabricate the evaluation cell of Example 2 in the same manner as in Example 1.

### (Example 3)

In the formation of the oxide-containing layer by low-temperature ALD, a coating of ZrO₂ was formed. The thickness of the coating measured by spectroscopic ellipsometry was 6.1 nm. A positive electrode of Example 3 was fabricated in the same manner as in Example 1 except for the above. The positive electrode of Example 3 was used to fabricate the evaluation cell of Example 3 in the same manner as in Example 1.

### (Comparative Example 1)

A positive electrode slurry was prepared by stirring the positive electrode active material having the composition of LiNi_{0.8}Mn_{0.2}O₂, acetylene black (AB), and polyvinylidene fluoride (PVDF) with N-methyl-2-pyrrolidone (NMP) added. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, a positive electrode of Comparative Example 1 was fabricated. That is, the positive electrode of Comparative Example 1 was free of a coated positive electrode active material including both an oxide-containing layer and a phosphorus-containing layer.

The positive electrode of Comparative Example 1 was used to fabricate the evaluation cell of Comparative Example 1 in the same manner as in Example 1.

### (Comparative Example 2)

A coating of SiO₂ was formed on the surface of the positive electrode active material having the composition of LiNi_{0.8}Mn_{0.2}O₂ in the same manner as in Example 1. The positive electrode active material was used to form a positive electrode active material layer on a positive electrode current collector in the same manner as in Comparative Example 1. Thus, the positive electrode of Comparative Example 2 was fabricated.

The positive electrode of Comparative Example 2 was used to fabricate the evaluation cell of Comparative Example 2 in the same manner as in Example 1.

### (Comparative Example 3)

A positive electrode of Comparative Example 3 was fabricated in the same manner as in Comparative Example 2, except that in the formation of the oxide-containing layer by low-temperature ALD, a coating of Al₂O₃ was formed in the same manner as in Example 2. The positive electrode of Comparative Example 3 was used to fabricate the evaluation cell of Comparative Example 3 in the same manner as in Example 1.

### (Comparative Example 4)

A positive electrode of Comparative Example 4 was fabricated in the same manner as in Comparative Example 2, except that in the formation of the oxide-containing layer by low-temperature ALD, a coating of ZrO₂ was formed in the same manner as in Example 3. The positive electrode of Comparative Example 4 was used to fabricate the evaluation cell of Comparative Example 4 in the same manner as in Example 1.

### (Comparative Example 5)

In the formation of the oxide-containing layer by low-temperature ALD, a coating of TiO₂ was formed. The thickness of the coating measured by spectroscopic ellipsometry was 3.2 nm. A positive electrode of Comparative Example 5 was fabricated in the same manner as in Comparative Example 2 except for the above. The positive electrode of Comparative Example 5 was used to fabricate the evaluation cell of Comparative Example 5 in the same manner as in Example 1.

### (Comparative Example 6)

A positive electrode slurry was prepared by stirring the positive electrode active material having the composition of LiNi_{0.8}Mn_{0.2}O₂, acetylene black (AB), and polyvinylidene fluoride (PVDF) with N-methyl-2-pyrrolidone (NMP) mixed. The mass ratio of these materials in the positive electrode active material layer was the positive electrode active material:AB:PVDF = 96:2:2.

The positive electrode slurry was applied to the surface of an aluminum foil (1.45 cm × 1.45 cm), the coating film was dried, and then rolled to form the positive electrode active material layer. Thus, an electrode plate was obtained in which the positive electrode active material layer was supported on a positive electrode current collector.

In the same manner as in Example 1, the electrode plate was immersed in a TMSP solution, washed with DMC, and then vacuum dried. Thus, a positive electrode of Comparative Example 6 was obtained.

The positive electrode of Comparative Example 6 was used to fabricate the evaluation cell of Comparative Example 6 in the same manner as in Example 1.

### [Evaluation of Metal Elution Amount]

The evaluation cells of the examples and comparative examples were subjected to two repeated charge and discharge cycles at an ambient temperature of 25°C, in which constant-current charge was conducted at a current value of 0.1C until the voltage reached 4.5 V and constant-current discharge was conducted at a current value of 0.1C until the voltage reached 2.5 V. Subsequently, constant-current charge was conducted at a current value of 0.2C until the voltage reached 4.5 V, and then the voltage of 4.5 V was maintained for 3 days at an ambient temperature of 55°C.

Subsequently, the amount of Mn eluted to the counter electrode was measured by ICP atomic emission spectrometry. The evaluation results are shown in Table 1.

**Table 1]**

| | Oxide | Phosphate compound | Mn elution amount (µmol) |
|---|---|---|---|
| Example 1 | SiO₂ | TMSP | 0.0360 |
| Example 2 | Al₂O₃ | TMSP | 0.0510 |
| Example 3 | ZrO₂ | TMSP | 0.0096 |
| Comparative Example 1 | - | - | 0.1200 |
| Comparative Example 2 | SiO₂ | - | 0.0870 |
| Comparative Example 3 | Al₂O₃ | - | 0.0810 |
| Comparative Example 4 | ZrO₂ | - | 0.0830 |
| Comparative Example 5 | TiO₂ | - | 0.1000 |
| Comparative Example 6 | - | TMSP | 0.0590 |

### (Discussion)

Examples 1 to 3 exhibited smaller amounts of Mn elution as compared to Comparative Example 1, in which the positive electrode active material was free of a coating. Furthermore, Examples 1 to 3 exhibited smaller amounts of Mn elution as compared to Comparative Examples 2 to 5, in which the positive electrode active material was coated only with an oxide. Based on the above, in Examples 1 to 3, metal elution from the positive electrode active material was suppressed. Mn elution was further suppressed owing to the inclusion of SiO₂ or ZrO₂ in the oxide. It is presumed that SiO₂ and ZrO₂ each stably remain on the surface of the positive electrode even after the battery undergoes charge and discharge, and consequently the phosphate compound is also effectively retained on the surface of the positive electrode, thereby effectively suppressing metal elution from the positive electrode active material.

### INDUSTRIAL APPLICABILITY

The technique of the present disclosure is useful for secondary batteries used as power sources in mobile communication devices, portable electronic devices, electric vehicles, and the like.

## Claims

1. A coated positive electrode active material comprising:
a positive electrode active material;
an oxide-containing layer coating at least a portion of a surface of a particle of the positive electrode active material; and
a phosphorus-containing layer coating at least a portion of a surface of the oxide-containing layer, wherein
the oxide-containing layer comprises an oxide and is in contact with the surface of the particle,
the phosphorus-containing layer comprises a phosphate compound, and
a mass ratio of P contained in the phosphorus-containing layer to the positive electrode active material is 0.1% or more.

2. The coated positive electrode active material according to claim 1, wherein
the oxide-containing layer consists substantially of the oxide.

3. The coated positive electrode active material according to claim 1, wherein
the oxide comprises at least one selected from the group consisting of Si, Zr, Al, and Ti.

4. The coated positive electrode active material according to claim 3, wherein
the oxide comprises at least one selected from the group consisting of Si and Zr.

5. The coated positive electrode active material according to claim 4, wherein
the oxide comprises at least one selected from the group consisting of SiO₂ and ZrO₂.

6. The coated positive electrode active material according to claim 1, wherein
the phosphate compound is bonded to the oxide.

7. The coated positive electrode active material according to claim 1, wherein
the phosphate compound comprises a P-O-P bond.

8. The coated positive electrode active material according to claim 7, wherein
the phosphate compound comprises a structure represented by chemical formula (1): 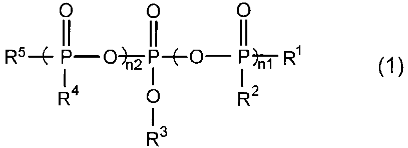
where n1 and n2 are each independently an integer equal to or greater than 0,
R¹, R², R⁴, and R⁵ each independently represent -OR or -(CH₂)ₘ₁X1,
R³ and R each independently represent a direct bond to the oxide, a hydrogen atom, -(CH₂)ₘ₂X2, a trimethylsilyl group, or a triethylsilyl group,
m1 is an integer from 0 to 15,
m2 is a natural number from 1 to 3,
X1 and X2 each independently represent a hydrogen atom, a hydroxy group, an amino group, a carboxy group, a cyano group, or a fluorine atom,
when a plurality of R²s are present, the plurality of R²s are independent of each other, and
when a plurality of R⁴s are present, the plurality of R⁴s are independent of each other.

9. The coated positive electrode active material according to claim 8, wherein
in the chemical formula (1), R¹, R², R⁴, and R⁵ each independently represent - OR, and
R³ and R each independently represent a direct bond to the oxide, a hydrogen atom, or a trimethylsilyl group.

10. The coated positive electrode active material according to claim 8, wherein
in the chemical formula (1), R³ represents a direct bond to the oxide.

11. The coated positive electrode active material according to claim 1, wherein
the positive electrode active material comprises a lithium nickel oxide, and
a proportion of Ni among metal elements excluding Li that are contained in the lithium nickel oxide is 50 atom% or more.

12. A positive electrode comprising:
a positive electrode current collector; and
a positive electrode active material layer supported on the positive electrode current collector, wherein
the positive electrode active material layer comprises the coated positive electrode active material according to any one of claims 1 to 11.

13. A secondary battery comprising:
the positive electrode according to claim 12;
a negative electrode; and
an electrolyte.

14. A method for manufacturing a positive electrode comprising a positive electrode current collector and a positive electrode active material layer supported on the positive electrode current collector, the method satisfying at least one selected from the group consisting of the following (A) and (B):
(A) comprising:
forming an oxide-containing layer on at least a portion of a surface of a particle of a positive electrode active material;
forming the positive electrode active material layer comprising the particle on the positive electrode current collector;
bringing a solution comprising a phosphate compound and a solvent into contact with the positive electrode active material layer; and
after the bringing the solution into contact, drying the positive electrode active material layer; and
(B) comprising:
forming an oxide-containing layer on at least a portion of a surface of a particle of a positive electrode active material;
bringing a solution comprising a phosphate compound and a solvent into contact with the particle on which the oxide-containing layer is formed;
after the bringing the solution into contact, vacuum drying the particle; and
forming the positive electrode active material layer comprising the particle after undergoing the drying on the positive electrode current collector.

15. The method according to claim 14, wherein
when satisfying the (A), the method further comprises, after the bringing the solution into contact and before the drying, washing the positive electrode active material layer, and
when satisfying the (B), the method further comprises, after the bringing the solution into contact and before the drying, washing the particle.

16. The method according to claim 14, wherein
the oxide-containing layer is formed by atomic layer deposition or a mechanochemical method.

17. The method according to claim 14, wherein
the phosphate compound comprises a structure represented by chemical formula (2): 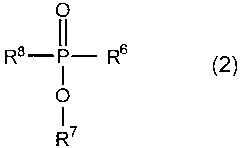
where R⁷ represents a hydrogen atom, -(CH₂)ₖ₁Y1, a trimethylsilyl group, or a triethylsilyl group,
R⁶ and R⁸ each independently represent -OR or -(CH₂)ₖ₂Y2,
R represents a hydrogen atom, -(CH₂)ₖ₃Y3, a trimethylsilyl group, or a triethylsilyl group,
k1 and k3 are each independently a natural number from 1 to 3,
k2 is an integer from 0 to 15, and
Y1, Y2, and Y3 each independently represent a hydrogen atom, a hydroxy group, an amino group, a carboxy group, a cyano group, or a fluorine atom.

18. The method according to claim 14, wherein
the phosphate compound comprises tris(trimethylsilyl) phosphate.
